# EUROPÄISCHE PATENTSCHRIFT

(11) **EP 0 479 190 B1**
(45) Veröffentlichungstag und Bekanntmachung des Hinweises auf die Patenterteilung: **04.05.1994**
(21) Anmeldenummer: 91116646.0
(22) Anmeldetag: 30.09.1991
(51) Int. Cl.: A01F 15/08, A01D 75/20, A01D 41/12

(54) **Fahrbare Erntemaschine, insbesondere Rundballenpresse**
Agricultural harvester, e.g. rotobaler
Machine de récolte, spécifiquement presse à balles rondes

(30) Priorität: 05.10.1990 DE 4031590
(43) Veröffentlichungstag der Anmeldung: 08.04.1992
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 294 712
- EP-A- 0 347 979
- EP-A- 0 377 163
- DE-A- 2 657 275
- GB-A- 2 138 354
- US-A- 4 624 179

## Beschreibung

Die Erfindung betrifft eine fahrbare Erntemaschine, insbesondere Rundballenpresse, mit einer beweglichen Erntegutauslaßvorrichtung, einer Betätigungsvorrichtung zum Bewegen der Erntegutauslaßvorrichtung und einer Überwachungsvorrichtung, die einen Bewegungszustand der Erntemaschine erfaßt, diesen mit einem vorbestimmten Bewegungszustand vergleicht und in Abhängigkeit von dem Ergebnis des Vergleichs die Betätigungsvorrichtung betreibt.

Eine bekannte Erntemaschine (US-PS-4,580,398) in der Art einer Rundballenpresse weist einen ersten und hauptsächlichen Preßraum auf, in dem ein Erntegutballen gebildet und gebunden wird, und einen zweiten Preßraum, in dem während des Bindevorgangs weiteres Erntegut so lange gesammelt wird, bis der in dem ersten Preßraum gebildete Erntegutballen gebunden ist. Auf diese Weise kann die Erntemaschine auch dann noch über das Feld bewegt werden, wenn der erste Preßraum schon gefüllt ist; die Erntemaschine muß nicht zur Vermeidung der weiteren Erntegutaufnahme angehalten werden. Erst nachdem der Erntegutballen gebunden ist, muß die Erntemaschine angehalten werden, bis der Erntegutballen ausgeworfen ist.

Diese Erntemaschine ist insofern nachteilig, als durch das Anhalten zum Auswerfen des Erntegutballens Zeit verstreicht, in der die Erntemaschine und deren Bedienungsperson nicht weiterarbeiten können. Insbesondere bei bevorstehender schlechter Witterung kann dies zu Ernteeinbußen führen.

Die Automatisierung des Öffnungsvorgangs der Erntegutauslaßvorrichtung scheitert scheinbar daran, daß stets auf Personen Rücksicht genommen werden muß, die sich im Arbeitsbereich der Erntemaschine aufhalten könnten.

Die EP-A-0 310 886 offenbart eine Rundballenpresse mit einer Ballenschubstange, die am Auslaß einer Ballenbildungskammer angeordnet und mittels einer Betätigungsvorrichtung in eine der Ballenbildungskammer zugelegene und in eine dieser abgelegene Stellung bringbar ist. Zur Steuerung der Bewegung der Ballenschubstange ist ein Sensor vorgesehen, der ermittelt, ob sich ein Ballen noch in der Ballenbildungskammer befindet. Sobald der Ballen die Ballenbildungskammer verlassen hat, gibt der Sensor eine Druckmittelzufuhr zur Betätigungsvorrichtung frei, so daß die Ballenschubstange den ausgeworfenen Ballen wegrollt.

Aus der EP-A-0 294 712 geht eine Sämaschine oder dergleichen Saatausbringgerät hervor, die mit einem Geschwindigkeitssensor und einem regelbaren Hydraulikmotor für die Saatausbringung versehen ist. Innerhalb bestimmter Grenzen wird die Geschwindigkeit des Hydraulikmotors abhängig von der Fahrtgeschwindigkeit verringert oder erhöht. Außerhalb dieser Grenzen wird der Hydraulikmotor abgeschaltet.

Die US-A-4,624,179 beschreibt eine Rundballenpresse mit einer Bindevorrichtung und einem Geschwindigkeitssensor, wobei der Geschwindigkeitssensor derart auf die Betätigungsorgane der Rundballenpresse wirkt, daß ein Auswerfen eines gebundenen Ballens nur möglich ist, wenn die Rundballenpresse still steht.

Die der Erfindung zugrunde liegende Aufgabe wird darin gesehen, eine Erntemaschine vorzuschlagen, bei der die Erntegutauslaßvorrichtung automatisch geöffnet oder geschlossen werden kann, ohne daß mit einer sich im Bewegungsbereich der Erntegutauslaßvorrichtung befindlichen Person gerechnet werden muß.

Die Anwendung bei einer Rundballenpresse stellt nur eine der möglichen Verwendungsformen dar. Grundsätzlich eignet sich die Erfindung bei allen Erntemaschinen, bei denen eine Entladung des Ernteguts oder von Teilen davon nur dann erfolgen soll, wenn die Erntemaschinen einen bestimmten Ruhe- oder Bewegungsvorgang vollziehen. Weitere Beispiele hierfür sind die Abgabe von Blattgut bei Rübenvollerntern, die nur während der Fahrt erfolgen soll, oder die Abgabe von Stroh aus dem Strohsammler eines Mähdreschers, die während der Rückwärtsfahrt vermieden werden soll.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise wird die Erntegutauslaßvorrichtung nur dann bewegt, wenn sich die Erntemaschine in dem Bewegungszustand befindet, der für die Abgabe des Ernteguts gefordert ist und in dem die zu überwachende bzw. zu ermittelnde Bedingung eingetreten ist. Es kann sich nämlich bei einer Rundballenpresse aufgrund ihrer Fortbewegung keine Person unterhalb der Erntegutauslaßvorrichtung befinden, und zwar insbesondere dann nicht, wenn erst eine Mindestgeschwindigkeit erreicht sein muß, die die Schrittgeschwindigkeit eines Menschen übersteigt, was im Vergleich mit der Arbeitsgeschwindigkeit einer Rundballenpresse normalerweise der Fall ist.

Das Vorliegen eines Bewegungszustandes, die Höhe der Geschwindigkeit und die Richtung der Geschwindigkeit können durch die Erfassung der Drehzahl und der Drehrichtung eines der auf dem Boden abrollenden Räder festgestellt werden. Hierzu kann eine Loch- oder Nockenscheibe verwendet werden, die mit dem Rad dreht und infolge der Drehung einen Lichtstrahl unterbricht, der selbst wiederum aufgrund der Unterbrechungsfrequenz ein Maß für die Geschwindigkeit abgibt.

In ähnlicher Weise kann auch mittels eines Radarsensors die Fortbewegung der Erntemaschine über das Feld nach Betrag und Richtung festgestellt werden, wozu das Echo eines auf den Boden ausgesandten Signals ausgewertet wird.

Gegebenenfalls können für die Erfassung der Fahrtrichtung zwei Sensoren verwendet werden, die eine Differenzgeschwindigkeit zwischen beiden Rädern erfassen.

Diese Informationen können elektronisch zu einem Signal verarbeitet werden, das auf ein elektrisch betätigtes Hydraulikventil oder einen Elektromotor zum Einleiten der Bewegung der Erntegutauslaßvorrichtung wirkt. Ein derartiges Signal kann aber auch ebenso in einem elektronischen Kleinrechner mit anderen Parametern zu einem Signal für das Hydraulikventil oder den Elektromotor verarbeitet werden.

Mittels eines Kleinrechners ist es auf einfache Weise möglich, das Signal zum Betätigen der Erntegutauslaßvorrichtung durch einen einfachen Vergleich zweier Beträge nicht nur davon abhängig zu machen, daß eine bestimmte Bedingung vorliegt; sondern es kann auch der Fortbestand der Bedingung während des gesamten Vorgangs der Betätigung der Erntegutauslaßvorrichtung überwacht werden. Sobald die anfänglich geforderte Bedingung nicht mehr gegeben ist, das heißt sobald z. B. die vorbestimmte Geschwindigkeit unterschritten wird, wird die weitere Bewegung der Erntegutauslaßvorrichtung beendet.

Da es auch Situationen gibt, in denen die Erntegutauslaßvorrichtung bewegt werden muß, obwohl die geforderte Bedingung nicht eingetreten ist, kann mittels eines Überbrückungsschalters die Betätigung manuell eingeleitet werden.

Von sehr großem Vorteil ist die Erfindung dann, wenn sie an einer Rundballenpresse mit einem zweiten Preßraum verwendet wird, der während der Abgabe des Erntegutballens mit Erntegut gefüllt werden kann. Bei einer solchen Rundballenpresse kann ohne Unterbrechung Erntegut aufgenommen und unter Beachtung der Gefährdung sich im Arbeitsbereich befindlicher Personen ausgeworfen werden. Bei einer Rundballenpresse ohne zweiten Preßraum ist die Verwendung dieser Erfindung nur deshalb weniger vorteilhaft, weil der Erntegutballen zwar ausgeworfen werden kann, aber kein neues Erntegut aufgenommen werden darf; vielmehr muß dieses von einer Aufsammeleinrichtung vor der sich fortbewegenden Erntemaschine hergeschoben werden, bis erneut Erntegut aufgenommen werden kann.

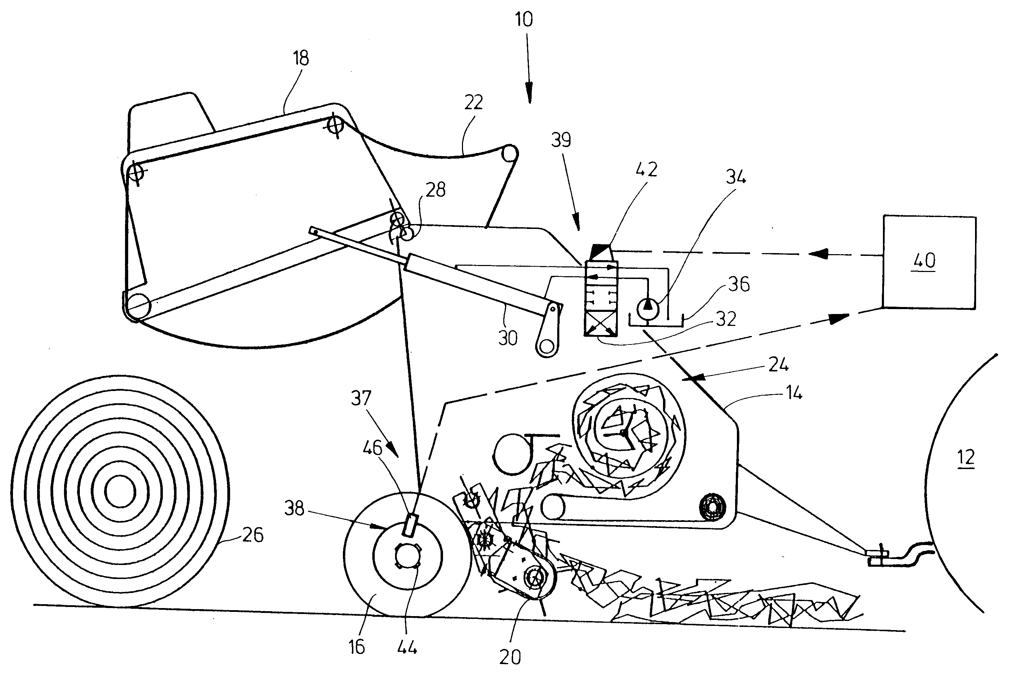

In der Zeichnung ist ein nachfolgend näher beschriebenes Ausführungsbeispiel der Erfindung dargestellt. Die einzige Figur zeigt eine Erntemaschine 10 in der Art einer Rundballenpresse, die an einen nur teilweise dargestellten Ackerschlepper 12 angehängt ist und auf dem Boden in Schwaden liegendes Erntegut aufnimmt und zu zylindrischen Erntegutballen 26 preßt.

Die Erntemaschine 10 enthält ein Gehäuse 14, das sich auf Rädern 16 fahrbar auf dem Boden abstützt und an einem rückwärtigen Endbereich von einer Erntegutauslaßvorrichtung 18 geschlossen wird. Unmittelbar vor den Rädern 16 befindet sich an der Unterseite des Gehäuses 14 eine Aufsammeleinrichtung 20, die das Erntegut von dem Boden anhebt. In dem Gehäuse 14 und der Erntegutauslaßvorrichtung 18 bzw. zwischen diesen wird ein erster in der Zeichnung nicht ersichtlicher Preßraum von umlaufenden Riemen 22 gebildet; ein zweiter Preßraum 24, der nur kurzfristig Erntegut von der Aufsammeleinrichtung 20 annimmt, befindet sich im vorderen Bereich des Gehäuses 14. Dieser zweite Preßraum 24 ist in Aufbau und Funktion ausführlich in der EP-A1-0 337 006 beschrieben, deren Offenbarung in diese Patentanmeldung ausdrücklich mit einbezogen wird.

Die Erntegutauslaßvorrichtung 18 greift in ihrem oberen Eckbereich in einem Gelenk 28 vertikal schwenkbeweglich an dem Gehäuse 14 an. Ein doppeltwirkender Hydraulikzylinder 30 greift einenends an der Erntegutauslaßvorrichtung 18 und anderenends an dem Gehäuse 14 schwenkbeweglich an und wird über ein elektromagnetisch betätigbares Hydraulikventil 32 von einer Pumpe 34 von Druckmittel aus einem Vorratsbehälter 36 beaufschlagt.

In dem ersten Preßraum wird das von der Aufsammeleinrichtung 20 aufgenommene und zum Teil in dem zweiten Preßraum 24 zwischengelagerte Erntegut zu einem runden Erntegutballen 26 verdichtet, der von Garn, Folie oder Netz umspannt und somit in seiner Form gehalten wird, sobald er die gewünschte Größe erreicht hat. Nach dem Bindevorgang wird der Erntegutballen 26 aus dem Preßraum befördert, wozu der Hydraulikzylinder 30 mit Druckmittel ausgefahren wird und die Erntegutauslaßvorrichtung 18 von dem Gehäuse 14 nach oben wegschwenkt. Der Erntegutballen 26 wird von dem sich dadurch öffnenden Preßraum freigegeben und fällt auf den Boden.

Um sicherzustellen, daß die Erntegutauslaßvorrichtung 18 nur dann mittels des Hydraulikzylinders 30 angehoben bzw. abgesenkt werden kann, wenn sich keine Person innerhalb ihres Schwenkbereichs befindet, ist eine Überwachungsvorrichtung 37 mit einem Sensor 38 und einem Kleinrechner 40 vorgesehen. Diese Überwachungsvorrichtung 37 wirkt auf eine Betätigungsvorrichtung 39, die außer dem Hydraulikzylinder 30, dem Hydraulikventil 32, der Pumpe 34 und dem Vorratsbehälter 36 einen Elektromagneten 42 enthält, der das Hydraulikventil 32 betätigt. Der Sensor 38, der Kleinrechner 40 und der Elektromagnet 42 stehen über elektrische Leitungen miteinander in Verbindung, und zwischen dem Vorratsbehälter 36, der Pumpe 34, dem Hydraulikventil 32 und dem Hydraulikzylinder 30 erstrecken sich Hydraulikleitungen. Die jeweiligen Verbindungen sind in der Zeichnung nicht näher bezeichnet.

Der Sensor 38 enthält eine Loch- oder Nockenscheibe 44, die drehfest mit einem der Räder 16 verbunden ist. Weiterhin ist eine Geber-Nehmer-Einheit 46 vorgesehen, die eine Licht- oder Schallwelle aussendet, die wiederum von den Nocken auf der Nockenscheibe 44 unterbrochen wird. Die Häufigkeit der Unterbrechung der Licht- oder Schallwelle entspricht der Geschwindigkeit, mit der die Erntemaschine 10 von dem Ackerschlepper 12 über das Feld bewegt wird.

Der Kleinrechner 40 enthält einen nicht gezeigten Speicher, in dem eine vorbestimmte Geschwindigkeit der Erntemaschine 10 für einen Vergleich mit der Ist-Geschwindigkeit gespeichert ist. Der Kleinrechner 40 nimmt das Signal von der Geber-Nehmer-Einheit 46 an, vergleicht es mit dem vorgegebenen Signal und sendet gegebenenfalls ein Signal an den Elektromagneten 42 aus. In dem Kleinrechner 40 ist hierzu software- oder hardwaremäßig ein Rechenprogramm installiert. Der Kleinrechner 40 kann mittels eines nicht gezeigten Überbrückungsschalters versehen und im Aufenthaltsbereich des Fahrers des Ackerschleppers 12 angeordnet sein, so daß der Fahrer das Hydraulikventil 32 auch unter Umgehung des Kleinrechners 40 betätigen kann.

Das Elektromagnetventil 42 enthält eine nicht gezeigte Spule und einen nicht gezeigten Anker, der mit einem Schieber oder dem Sitzventil des Hydraulikventils 32 verbunden ist, um dieses bei Erregung der Spule zu verstellen.

Die Funktion der Erfindung wird im folgenden anhand des zuvor beschriebenen Aufbaus näher erläutert.

Es wird davon ausgegangen, daß die Erntegutauslaßvorrichtung 18 eine Stellung eingenommen hat, in der sie an dem Gehäuse 14 anliegt und den ersten Preßraum verschließt; diese Stellung entspricht nicht der in der Zeichnung gezeigten. Es wird weiter angenommen, daß die Erntemaschine 10 von dem Ackerschlepper 12 über ein Feld mit Erntegut bewegt wird und die Aufsammeleinrichtung 20 den ersten Preßraum so weit gefüllt hat, daß dort ein Bindevorgang mittels einer der Einfachheit halber nicht gezeichneten Bindevorrichtung stattfindet. Währenddessen wird Erntegut dem zweiten Preßraum 24 zugeführt.

Der Sensor 38 erkennt an der Drehung der Nockenscheibe 44, daß die Erntemaschine 10 mit einer bestimmten Geschwindigkeit über das Feld bewegt wird. Die Anzahl der durch die Unterbrechung der Licht- oder Wellenschranke aus der Geber-Nehmer-Einheit gewonnenen Impulse wird von dem Kleinrechner 40 gezählt und mit dem Umfang des Rades 16 multipliziert, dessen Umdrehungen gezählt werden. Die daraus abgeleitete Fortbewegungsgeschwindigkeit der Erntemaschine wird mit der gespeicherten Geschwindigkeit verglichen, die die Erntemaschine 10 mindestens erreichen muß, damit ausgeschlossen werden kann, daß sich eine Person im Schwenkbereich der Erntegutauslaßvorrichtung 18 aufhält. Jedenfalls dann, wenn die Fortbewegungsgeschwindigkeit die Schrittgeschwindigkeit eines Menschen übersteigt, kann davon ausgegangen werden, daß sich keine Person zufällig im Bewegungsbereich der Erntegutauslaßvorrichtung 18 aufhält. Sobald der Kleinrechner 40 feststellt, daß die Mindestgeschwindigkeit erreicht ist, wird ein Signal an den Elektromagneten 42 ausgesandt, der daraufhin das Hydraulikventil 32 so verstellt, daß Druckmittel von der Pumpe 34 dem Hydraulikzylinder 30 zuströmt und diesen ausfährt. Durch das Ausfahren des Hydraulikzylinders 30 wird die Erntegutauslaßvorrichtung 18 von dem Gehäuse 14 weggeschwenkt und läßt den Erntegutballen 26 aus dem ersten Preßraum fallen. Nachdem der Erntegutballen 26 den Preßraum verlassen hat und sofern die Mindestgeschwindigkeit nicht unterschritten ist, wird das Hydraulikventil 32 umgeschaltet, der Hydraulikzylinder 30 fährt wieder ein, und die Erntegutauslaßvorrichtung 18 verschließt wieder den ersten Preßraum.

## Patentansprüche

1. Fahrbare Erntemaschine (10), insbesondere Rundballenpresse, mit einer beweglichen Erntegutauslaßvorrichtung (18), einer Betätigungsvorrichtung (39) zum Bewegen der Erntegutauslaßvorrichtung (18) und einer Überwachungsvorrichtung (37), die einen Bewegungszustand der Erntemaschine (10) erfaßt, diesen mit einem vorbestimmten Bewegungszustand vergleicht und in Abhängigkeit von dem Ergebnis des Vergleichs die Betätigungsvorrichtung (39) betreibt, dadurch gekennzeichnet, daß der vorbestimmte Bewegungszustand eine mindestens zu erreichende Fortbewegungsgeschwindigkeit der Erntemaschine darstellt und die Erntegutauslaßvorrichtung (18) einen Preßraum für Erntegut freigibt, wenn sich die Erntemaschine (10) mit einer vorbestimmten Mindestgeschwindigkeit bewegt.

2. Fahrbare Erntemaschine nach Anspruch 1, dadurch gekennzeichnet, daß die Erntemaschine auf Rädern (16) beweglich ist und die Überwachungsvorrichtung (37) einen Sensor (38) zur Erfassung der Drehzahl mindestens eines Rades (16) enthält.

3. Fahrbare Erntemaschine nach Anspruch 2, dadurch gekennzeichnet, daß der Sensor (38) eine Loch- oder Nockenscheibe (44) und eine Geber-Nehmer-Einheit (46) enthält, wobei die Loch- oder Nockenscheibe (44) mit dem betreffenden Rad (16) drehfest verbunden ist.

4. Fahrbare Erntemaschine nach Anspruch 2, dadurch gekennzeichnet, daß der Sensor (38) als Radarsensor ausgebildet ist, der die Fortbewegungsgeschwindigkeit und/oder die Fortbewegungsrichtung der Erntemaschine (10) mißt.

5. Fahrbare Erntemaschine nach Anspruch 3 oder 4, dadurch gekennzeichnet, daß die Überwachungsvorrichtung (37) einen elektronischen Kleinrechner (40) mit einem Speicher enthält, wobei dem Speicher ein Signal für den zu erreichenden Bewegungszustand, insbesondere die mindestens zu erreichende Geschwindigkeit, eingegeben wird und mit dem von dem Sensor (38) erzeugten Signal nach seinem Betrag und gegebenenfalls nach seiner Richtung verglichen wird.

6. Fahrbare Erntemaschine nach Anspruch 3 oder 4, dadurch gekennzeichnet, daß die Überwachungsvorrichtung (37) den Betrieb der Betätigungseinrichtung (39) unterbricht, sobald die zu überwachende Bedingung nicht mehr gegeben ist.

7. Fahrbare Erntemaschine nach einem oder mehreren der vorherigen Ansprüche, dadurch gekennzeichnet, daß die Überwachungsvorrichtung (37) überbrückbar und die Betätigungsvorrichtung (39) manuell bedienbar ist.

8. Fahrbare Erntemaschine nach einem oder mehreren der vorherigen Ansprüche, dadurch gekennzeichnet, daß sie einen Preßraum zum Bilden eines Erntegutballens (26), eine Vorrichtung zum Binden des Erntegutballens (26) und einen weiteren Preßraum (24) zum Sammeln von Erntegut während des Bindevorgangs aufweist.

## Claims

1. A mobile harvesting machine (10), especially a round baler, with a movable discharge device (18) for harvested material, an actuating device (39) for moving the discharge device (18) for harvested material and a monitoring device (37) which detects a state of movement of the harvesting machine (10), compares this with a predetermined state of movement and operates the actuating device (39) in dependence on the results of the comparison, characterized in that the predetermined state of movement represents a minimum speed of progress of the harvesting machine to be attained and the discharge device (18) for harvested material clears a compression space for harvested material when the harvesting machine (10) moves with a predetermined minimum speed.

2. A mobile harvesting machine according to claim 1, characterized in that the harvesting machine is movable on wheels (16) and the monitoring device (37) comprises a sensor (38) for detecting the speed of rotation of at least one wheel (16).

3. A mobile harvesting machine according to claim 2, characterized in that the sensor (38) comprises an apertured or cam disc (44) and a transmitter-receiver unit (46), the apertured or cam disc (44) being connected rotationally fast with the wheel (16) in question.

4. A mobile harvesting machine according to claim 2, characterized in that the sensor (38) is formed as a radar sensor, which measures the speed of progress and/or the direction of movement of the harvesting machine (10).

5. A mobile harvesting machine according to claim 3 or 4, characterized in that the monitoring device (37) comprises an electronic microprocessor (40) with a memory, wherein a signal for the minimum state of movement to be attained is supplied to the memory, in particular the minimum speed to be attained, and with which the signal generated by the sensor (38) is compared according to its magnitude and if desired its direction.

6. A mobile harvesting machine according to claim 3 or 4, characterized in that the monitoring device (37) interrupts the operation of the actuating device (39) as soon as the monitored condition is no longer met.

7. A mobile harvesting machine according to one or more of the preceding claims, characterized in that the monitoring device (37) can be bypassed and the actuating device (39) be manually operated.

8. A mobile harvesting machine according to one or more of the preceding claims, characterized in that it comprises a compression space for forming a round bale (26) of harvested material, a device for tying the round bale (26) of harvested material, and a further compression space (24) for collecting harvested material during the tying operation.

## Revendications

1. Récolteuse mobile (10), notamment presse à balles rondes, avec un dispositif déplaçable (18) d'évacuation du produit récolté, un dispositif d'actionnement (39) pour déplacer le dispositif (18) d'évacuation du produit récolté, et un dispositif de surveillance (37), qui détecte un état de déplacement de la récolteuse (10), le compare avec un état de déplacement prédéterminé et manoeuvre le dispositif d'actionnement (39) en fonction du résultat de la comparaison, **caractérisée** en ce que l'état de déplacement prédéterminé représente une vitesse de marche avant minimale à atteindre par la récolteuse, et le dispositif (18) d'évacuation du produit récolté libère une chambre de pressage du produit récolté lorsque la récolteuse (10) se déplace à une vitesse minimale prédéterminée.

2. Récolteuse mobile selon la revendication 1, **caractérisée** en ce que la récolteuse est mobile sur des roues (16), et le dispositif de surveillance (37) comprend un capteur (38) pour détecter la vitesse de rotation d'au moins une roue (16).

3. Récolteuse mobile selon la revendication 2, **caractérisée** en ce que le capteur (38) comprend un disque à trous ou à cames (44) et une unité émettrice-réceptrice (46), le disque à trous ou à cames (44) étant relié en solidarité de rotation à la roue (16) concernée.

4. Récolteuse mobile selon la revendication 2, **caractérisée** en ce que le capteur (38) est réalisé sous la forme d'un capteur à radar, qui mesure la vitesse de marche avant et/ou la direction de marche avant de la récolteuse (10).

5. Récolteuse mobile selon la revendication 3 ou 4, **caractérisée** en ce que le dispositif de surveillance (37) comprend un microcalculateur électronique (40) avec une mémoire, un signal pour l'état de déplacement à atteindre, notamment la vitesse minimale à atteindre, étant introduit dans la mémoire, et sa valeur ainsi qu'éventuellement sa direction étant comparées à celles du signal produit par le capteur (38).

6. Récolteuse mobile selon la revendication 3 ou 4, **caractérisée** en ce que le dispositif de surveillance (37) interrompt le fonctionnement du dispositif d'actionnement (39) dès que la condition à surveiller n'est plus remplie.

7. Récolteuse mobile selon l'une quelconque des revendications précédentes, **caractérisée** en ce que le dispositif de surveillance (37) peut être court-circuité et le dispositif d'actionnement (39) manoeuvré à la main.

8. Récolteuse mobile selon l'une quelconque des revendications précédentes, **caractérisée** en ce qu'elle présente une chambre de pressage pour former une balle de produit récolté (26), un dispositif pour lier la balle de produit récolté (26), et une chambre de pressage supplémentaire (24) pour recueillir le produit récolté pendant le liage.
